# EUROPEAN PATENT APPLICATION

(11) **EP 4 434 816 A1**
(43) Date of publication of application: **25.09.2024**
(21) Application number: 22895611.6
(22) Date of filing: 15.11.2022
(51) Int. Cl.: B60Q 1/50, B60Q 1/115

(54) **LIGHTING SYSTEM AND LAMP CONTROLLER AND CONTROL METHOD**

(30) Priority: 19.11.2021 JP 2021188627
(71) Applicant: KOITO MANUFACTURING CO., LTD., Minato-ku Tokyo 108-8711 (JP)
(72) Inventor: SUMITANI Hiroki, Shizuoka-shi Shizuoka 424-8764 (JP); OZAWA Haruyuki, Shizuoka-shi Shizuoka 424-8764 (JP)
(74) Representative: Algemeen Octrooi- en Merkenbureau B.V.
(86) International application number: PCT/JP2022/042449
(87) International publication number: WO 2023/090330

(57) **Abstract**

A high-definition lamp unit 110 has a plurality of individually controllable pixels PIX, and illuminates a road face with beam BM with a light distribution pattern PTN corresponding to states of the pixels PIX. The sensor 120 is provided to enable detection of a pitch angle θp of a vehicle body. A controller 200 controls on/off of the pixels PIX according to the pattern PTN to be drawn on the road face, and corrects the states of the pixels PIX according to the pitch angle θp.

## Description

### TECHNICAL FIELD

The present disclosure relates to a vehicle lamp.

### BACKGROUND ART

Many of vehicle lamps are designed to be switchable between low beam and high beam. The low beam aims to illuminate a nearby area of an own vehicle with a predetermined illuminance, whose light distribution is regulated by rules so as not to give glare to an oncoming vehicle or a preceding vehicle, and is mainly used during travel in an urban area. On the other hand, the high beam aims to illuminate a wide and far front area with a relatively high illuminance, and is mainly used during high-speed travel on a road with less traffic of oncoming vehicle or preceding vehicle. The high beam, thus capable of providing a driver with better visibility as compared with the low beam, has however suffered from a problem of causing glare to a vehicle driver or a pedestrian ahead of the own vehicle.

There is a recent proposal on adaptive driving beam (ADB) technology for dynamically and adaptively controlling a high beam light distribution pattern, with reference to surrounding state of the vehicle. The ADB technology is designed to detect a preceding vehicle, an oncoming vehicle (collectively referred to as front vehicles), a pedestrian, and a sign (collectively referred to as a target, hereinafter) ahead of the own vehicle, and to reduce glare given to the vehicle by shielding or dimming an area corresponded to the vehicle.

Having been proposed a technique of drawing a figure, a character or the like typically for driving assistance onto a road face, with use of a lamp having high spatial resolution.

### CITATION LIST

### Patent Literature

Patent Literature 1: WO2020/262445A1

### SUMMARY OF INVENTION

### TECHNICAL PROBLEM

The present inventors examined the road face drawing, to find a problem below.

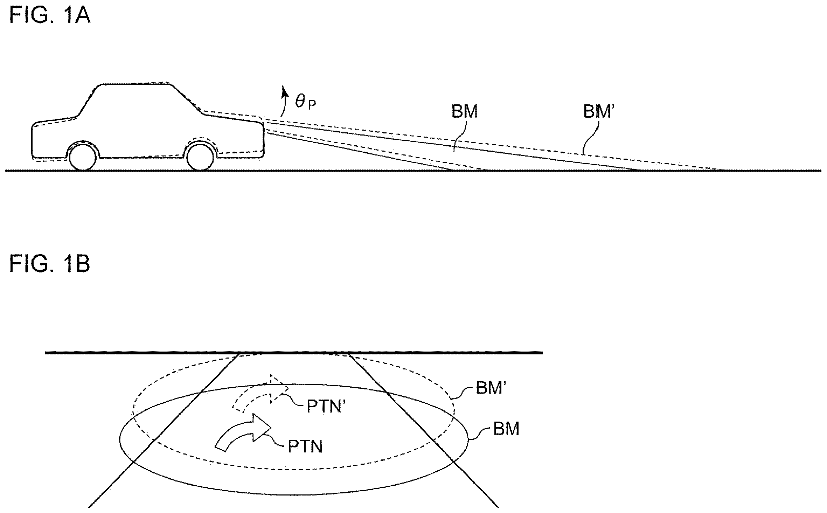

Fig. 1 is a drawing illustrating a problem that occurs in the road face drawing. The posture (pitch angle) θp of a vehicle body dynamically changes during travel, while affected by a step or irregularity on the road face. Upon change of posture of the vehicle body, the optical axis of a beam BM for road face drawing changes, thereby changing the angle of illumination (incident angle) on the road face. Change of the angle of illumination on the road face shifts a drawing position. The pitch angle, if changes rapidly, will blur the figure drawn on the road face, thus degrading the visibility. Meanwhile, the pitch angle, if changes slowly, would undesirably make a driver or a fellow passenger feel bothered or induce carsickness.

In addition, the posture of the vehicle body can also change statically depending on the number of passengers and the weight of baggage. Upon change of the illumination angle on the road face due to the attitude change of the vehicle body, the figure drawn on the road face would be distorted, thus degrading the visibility.

Note that this problem was uniquely recognized by the present inventors, and should not be regarded as a common recognition of those skilled in the art.

The present disclosure has been arrived in such circumstances, and one of exemplary purposes thereof is to improve visibility of the road face drawing.

### SOLUTION TO PROBLEM

One mode of the present disclosure relates to a lamp system. The lamp system includes: an adaptive driving beam lamp that contains a plurality of individually controllable pixels, and is structured to illuminate a road face with beam with a light distribution pattern corresponding to states of the pixels; a sensor provided to enable detection of a pitch angle of a vehicle body; and, a controller structured to control on/off of the pixels in response to a pattern to be drawn on the road face, and to correct the states of the pixels in response to the pitch angle.

Another mode of the present disclosure relates to a controller for an adaptive driving beam lamp that contains a plurality of individually controllable pixels, and is structured to illuminate a road face with beam with a light distribution pattern corresponding to states of the pixels. The controller is structured to conduct: setting on/off to the pixels in response to a pattern to be drawn on a road face; and correcting the states of the pixels in response to a pitch angle of a vehicle body.

Still another mode of the present disclosure relates to a control method of an adaptive driving beam lamp that contains a plurality of individually controllable pixels, and is structured to illuminate a road face with beam with a light distribution pattern corresponding to states of the pixels. The control method includes: detecting a pitch angle of a vehicle body; and controlling on/off of the pixels in response to a pattern to be drawn on the road face, as well as correcting the states of the pixels in response to the pitch angle.

Note that also free combinations of these constituents, and also any of the constituents and expressions exchanged among the method, apparatus and system, are valid as the modes of the present disclosure. Also note that the description of this section (SUMMARY OF THE INVENTION) does not describe all essential features of the invention, and thus also subcombinations of these features described may constitute the invention.

### ADVANTAGEOUS EFFECTS OF INVENTION

According to one mode of the present disclosure, visibility of the road face drawing may be improved.

### BRIEF DESCRIPTION OF DRAWINGS

[Fig. 1] Fig. 1 is a drawing illustrating a problem that occurs in the road face drawing.
[Fig. 2] Fig. 2 is a block diagram illustrating a lamp system according to an embodiment.
[Fig. 3] Figs. 3(a) and (b) are drawings illustrating pitch angles θp of a vehicle body.
[Fig. 4] Fig. 4 is a functional block diagram of a controller.
[Fig. 5] Fig. 5 is a drawing illustrating an exemplary travel scene of a vehicle.
[Fig. 6] Fig. 6 is a diagram illustrating a waveform of dynamic pitch angle θd and a waveform of correction amount Δy, corresponded to the travel scene illustrated in Fig. 5.
[Fig. 7] Figs. 7(a) and (b) are drawings illustrating operations of a lamp system according to an embodiment.
[Fig. 8] Figs. 8(a) and (b) are drawings illustrating correction of an on-pixel group PG_ON.

### DESCRIPTION OF EMBODIMENTS

### (Outline of Embodiments)

Some exemplary embodiments of the present disclosure will be outlined. This outline will provide introduction into the detailed description that follows, and will brief some concepts of one or more embodiments for basic understanding thereof, without limiting the scope of the invention or disclosure. Also note this summary is not a comprehensive overview of all possible embodiments, and thus does not limit the essential components of the embodiments. For convenience, the term "one embodiment" may be used to designate one embodiment (Example or Modified Example), or a plurality of embodiments (Examples or Modified Examples) disclosed in the present specification.

The lamp system according to one embodiment includes: an adaptive driving beam lamp that contains a plurality of individually controllable pixels, and is structured to illuminate a road face with beam with a light distribution pattern corresponding to states of the pixels; a sensor provided to enable detection of a pitch angle of a vehicle body; and, a controller structured to control on/off of the pixels in response to a pattern to be drawn on the road face, and to correct the states of the pixels in response to the pitch angle.

With this structure, a pattern may be drawn at the same position (relative position with respect to the vehicle) as viewed from the vehicle, regardless of the change in the pitch angle. Thus, the visibility may be improved.

In one embodiment, the controller may correct the states of the pixels, in response to a dynamic change in the pitch angle of the vehicle body of the vehicle during travel. This stabilizes a position of the pattern drawing during travel, thus preventing an image from blurring, and improving the visibility.

In one embodiment, the controller may correct the states of the pixels, in response to the pitch angle of the vehicle body of a vehicle during standing. This successfully reduces distortion of a pattern to be drawn on the road face.

In one embodiment, the controller may shift a position of an on-pixel group being turned on, from among the pixels, in the vertical direction in response to the pitch angle. This successfully stabilizes the drawing position with a simple process.

In one embodiment, the controller may conduct the correction by changing an arrangement of an on-pixel group being turned on, from among the pixels, in response to the pitch angle. This successfully reduces distortion of a pattern to be drawn on the road face.

In one embodiment, the pitch angle may contain a dynamic component whose frequency is 0.5 Hz or higher.

In one embodiment, the sensor may contain a gyro sensor. The dynamic pitch angle may be determined by acquiring the angular velocity in the pitch direction with use of the gyro sensor, and then by integrating the angular velocity.

A controller according to one embodiment is a controller for an adaptive driving beam lamp that contains a plurality of individually controllable pixels, and is structured to illuminate a road face with beam with a light distribution pattern corresponding to states of the pixels. The controller is structured to conduct: setting on/off to the pixels in response to a pattern to be drawn on a road face; and correcting the states of the pixels in response to a pitch angle of a vehicle body.

### (Embodiments)

Preferred embodiments will be explained below, referring to the attached drawings. All similar or equivalent constituents, members and processes illustrated in the individual drawings will be given same reference numerals, so as to properly avoid redundant explanations. The embodiments are merely illustrative, and are not restrictive about the disclosure. All features and combinations thereof described in the embodiments are not always essential to the disclosure.

In the present specification, a "state in which a member A is coupled to a member B" includes a case where the member A and the member B are physically and directly coupled, and a case where the member A and the member B are indirectly coupled while placing in between some other member that does not substantially affect the electrically coupled state, or does not degrade the function or effect demonstrated by the coupling thereof.

Similarly, a "state in which member C is provided between member A and member B" includes a case where the member A and the member C, or the member B and the member C are directly connected, and a case where they are indirectly connected, while placing in between some other member that does not substantially affect the electrical connection state among the members, or does not degrade the function or effect demonstrated by the members.

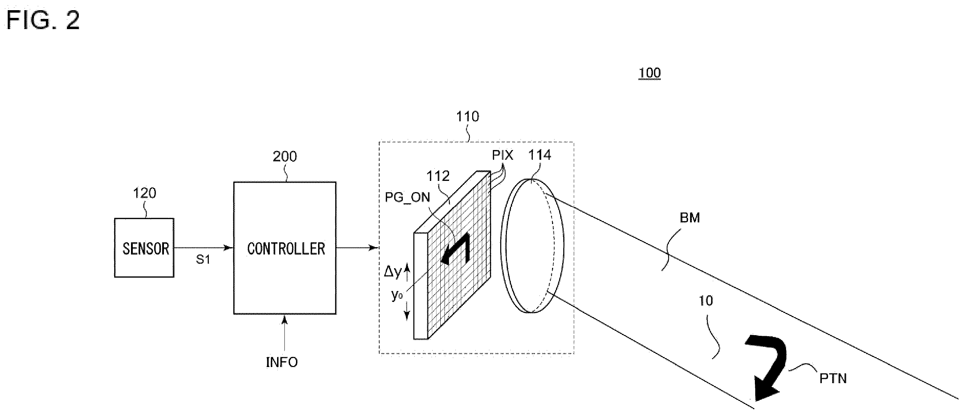

Fig. 2 is a block diagram illustrating a lamp system 100 of an embodiment. The lamp system 100 is a road face drawing lamp that is mounted on an automobile, and illuminates a road face ahead of the vehicle with beam.

The lamp system 100 has a high-definition lamp unit 110, a sensor 120, and a controller 200.

In this embodiment, the high-definition lamp unit 110 is an adaptive driving beam lamp which is structured to illuminate the road face ahead of the vehicle. The high-definition lamp unit 110 may alternatively cover a part/all of a low beam region. A high-definition lamp unit 110 has a plurality of individually controllable pixels PIX, and illuminates a road face with beam BM (referred to as road face illumination beam) with a light distribution pattern PTN corresponding to states of the pixels PIX. The high-definition lamp unit 110 typically includes a light emitting element array 112, and an illumination optical system 114. The light emitting element array 112 usable here may be an LED array.

The luminance of each pixel PIX may be controllable in two gradations of ON and OFF, or may be controllable in multiple gradations. The pixels, when structured to be controllable in two gradations of ON and OFF, may alternatively be expressed in multiple gradations with the aid of PWM dimming, by which the individual pixels PIX are switched at high speed, while varying the temporal ratio (duty cycle) between the on-time and the off-time.

The illumination optical system 114 projects the output light from the light emitting element array 112, to the front of the vehicle. The illumination optical system 114 may be a lens optical system, a reflection optical system, or a combination thereof.

Fig. 2 illustrates a road face 10. A pattern (figure) PTN is formed on the road face 10 with the road face drawing beam BM emitted from the high-definition lamp unit 110. The pattern PTN may be graphic information or character information, whose shape and meaning are not limited in the present disclosure.

The light distribution pattern PTN represents an intensity distribution of the beam on the road face 10, and corresponds to an on/off pattern of the pixels PIX of a light emitting element array 112. Note that the correspondence between the position of a certain pixel PIX, with an illumination area on the road face 10 ascribed to the pixel, is determined by the illumination optical system 114, and may be occasionally given in a mirror image relation (left-right inversion), up-down inversion, or up-down and left-right inversion.

The automobile can vary the angle of inclination in the front-rear direction (vehicle posture), in response to front-rear weight balance. The angle of inclination also changes in response to irregularity or step on the road face during travel. The angle of inclination in the front-rear direction corresponds to pivoting around a horizontal axis that extends in the left-right direction of the vehicle body, and is referred to as pitch angle (also referred to as posture angle) θp. The sensor 120 is provided to enable detection of the pitch angle θp of the vehicle body on which the lamp system 100 is mounted.

The controller 200 receives, from the vehicle, drawing information INFO regarding the pattern PTN to be drawn on the road face. The drawing information INFO may contain data related to type and shape of the pattern. The drawing position may alternatively be changed in response to vehicle speed or the like. The drawing information INFO in this case may also contain data related to the drawing position. The drawing position means a relative position with respect to the vehicle.

The controller 200 turns on a pixel group (on-pixel group) PG_ON that corresponds to the pattern PTN from among the pixels PIX of the light emitting element array 112, and turns off the remaining pixels.

The high-definition lamp unit 110 and the controller 200 may be built in the head lamp.

The sensor 120 may be provided on the head lamp side or on the vehicle side. When provided on the head lamp side, the sensor 120 may be incorporated in a housing (lamp body) of the head lamp, or may be externally attached to the lamp body. When provided on the vehicle side, the sensor 120 may be arranged in a vehicle cabin, or may be arranged outside the vehicle cabin, for example, in an engine room.

In this embodiment, the controller 200 corrects the drawing position of the pattern PTN, in response to fluctuation of the pitch angle θp ascribed to various factors during standing and travel of the vehicle.

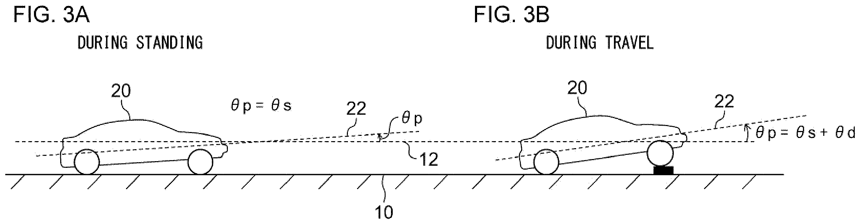

Figs. 3(a) and (b) are drawings illustrating the pitch angles θp of the vehicle body. Fig. 3(a) illustrates the pitch angle θp when the vehicle stands still. The pitch angle θp in a stationary state of the vehicle is defined as static pitch angle θs. The static pitch angle θs, representing the posture of the vehicle when stopped, is also referred to as a standing vehicle posture angle. The static pitch angle θs is determined corresponding, for example, to the number of passengers, riding position, weight of baggage in a baggage compartment, and rigidity of front and rear suspensions. In this embodiment, an angle formed between a straight line 12 parallel to the road face 10 and a reference line 22 of the vehicle body 20 is defined as a pitch angle θp, and the direction in which the reference line 22 points upward (nose-up direction) is defined to be positive.

Fig. 3(b) illustrates the pitch angle θp of the vehicle during travel. The pitch angle θp of the vehicle in the drive mode may be understood to be the sum of the static pitch angle θs and a dynamic component (also referred to as dynamic pitch angle or pitch angle variation) θd. The dynamic pitch angle θd may contain the following components.
· (i) Nose-up upon acceleration of vehicle body, and nose-down upon deceleration
· (ii) Change in load (weight balance) of vehicle body, typically due to slope of road face
· (iii) Rapid vibration of vehicle body due to irregularity on road face

(i) The pitch angle variation upon acceleration or deceleration of the vehicle body, or (ii) the change in the pitch angle due to load change of the vehicle body, which lasts for several seconds, may typically be understood to be DC fluctuation, with a very low frequency component (0.5 Hz or lower).

In contrast, (iii) the vibration of the vehicle body caused by the irregularity on the road face usually falls within the range from approximately 0.5 to 5 Hz, although depending on the rigidity of the suspension or the vehicle weight. The sudden vehicle body vibration typically falls in the range from 0.9 to 2 Hz.

Referring now back to Fig. 2. The controller 200 detects the pitch angle θp of the vehicle body, in response to an output (detection signal) S1 of the sensor 120. The pitch angle θp contains the static pitch angle θs and the dynamic pitch angle θd, as described above. The controller 200 shifts the position of the on-pixel group PG_ON that corresponds to the pattern PTN in the vertical direction, in response to the pitch angle θp of the vehicle body.

For example, the controller 200 determines a reference position y₀ of the on-pixel group PG_ON, in response to a static pitch angle θs of the vehicle obtainable while standing still. Upon detection of the dynamic pitch angle θd during travel, the controller 200 shifts the on-pixel group PG_ON in the vertical direction from the reference position y₀.

The sensor 120 in this embodiment contains a gyro sensor. The gyro sensor, whose orientation of attachment is freely selectable, is preferably attached so as to align one of the detection axes with the left-right horizontal direction of the vehicle body, thereby generating a detection signal S1 that represents angular velocity ωp of the rotational movement around the detection axis. The gyro sensor may be triaxial, or monoaxial. The gyro sensor enables detection of a dynamic pitch angle θd of 0.5 to 5 Hz.

The sensor 120 may contain an acceleration sensor, besides the gyro sensor. With the acceleration sensor, it becomes possible to detect acceleration of the vehicle body while standing still, or, having no motion acceleration (that is, gravitational acceleration). The gravity acceleration may be used to detect the posture angle θs of the vehicle while standing still. The static pitch angle θs may alternatively be detected with a vehicle height sensor attached to a suspension.

The controller 200 is an electronic control unit (ECU) in which functions related to optical axis correction are integrated, and is assigned to processing regarding the dynamic leveling. The controller 200 may be an ECU dedicated to leveling (also referred to as a leveling ECU), may be an ECU integrated with a controller having other functions, or may be separately embodied in a plurality of ECUs.

The function of the controller 200 may be embodied by software processing, hardware processing, or a combination of software processing and hardware processing. The software processing may be specifically implemented by combining a processor (hardware) such as central processing unit (CPU), micro processing unit (MPU), or microcomputer, with software program executed by the processor (hardware). The controller 200 may be embodied by combination of a plurality of processors (microcontrollers).

The hardware processing is specifically implemented by hardware such as application specific integrated circuit (ASIC), controller IC, or field programmable gate array (FPGA).

The controller 200 detects the dynamic component θd in the pitch angle θp during travel of the vehicle, by integrating the angular velocity ωp represented by the detection signal S1. Now, the dynamic component θd may be understood as a component, out of the fluctuation of the pitch angle θp, contained in a frequency band higher than 0.5 Hz. For example, a component contained in a predetermined frequency band, out of the fluctuation of the pitch angle θp, is determined as the dynamic component to be corrected. The predetermined frequency band may be determined typically within the range from approximately 0.5 Hz to 5 Hz. Which frequency band is to be corrected may only be determined, typically depending on rigidity of the suspension, or the mass of the vehicle body.

The controller 200 then shifts the position y of the on-pixel group, in the vertical direction with reference to the reference position y₀, in response to the dynamic component θd of the pitch angle θp of the vehicle body during travel. More specifically, the controller 200 shifts the on-pixel group PG_ON to one of the vertical direction from the reference position y₀, corresponding to the positive dynamic pitch angle θd; meanwhile shifts the on-pixel group PG_ON to the other one of the vertical direction from the reference position y₀, corresponding to the negative dynamic pitch angle θd. The sign of the dynamic pitch angle θd and the direction of shifting of the pixels are determined according to the optical system of the high-definition lamp unit 110. This makes the pattern PTN on the road face approach the own vehicle corresponding to the positive dynamic pitch angle θd, meanwhile makes the pattern PTN on the road face shift away from the own vehicle corresponding to the negative dynamic pitch angle θd.

By how many pixels the on-pixel group PG_ON should be shifted, per a certain range of fluctuation of the pitch angle θp, may be determined in terms of geometrical optics. Let the shift amount of pixel be Δy.

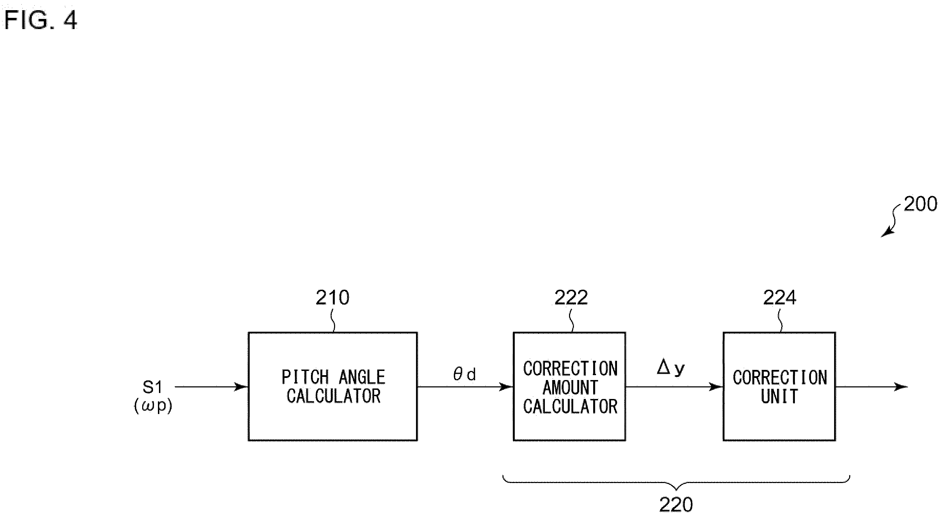

Fig. 4 is a functional block diagram of the controller 200. Fig. 4 illustrates blocks that take part in correction of the dynamic pitch angle θp. The controller 200 has a pitch angle calculator 210 and a drawing position correction unit 220.

The pitch angle calculator 210 detects the dynamic component θd in the pitch angle θp, in response to an output of the sensor 120. For example, the pitch angle calculator 210 integrates the angular velocity ωp indicated by the detection signal S1. The pitch angle calculator 210 also optionally subject the integral value to arithmetic processing, to derive the dynamic pitch angle θd. This arithmetic processing may typically include filtering (band limiting), and moving average processing.

The drawing position correction unit 220 shifts the on-pixel group PG_ON in the vertical direction, in response to the dynamic pitch angle θd. The drawing position correction unit 220 has a correction amount calculator 222 and a correction unit 224. The correction amount calculator 222 calculates the amount of shift (correction amount Δy) of the on-pixel group PG_ON, in response to the dynamic pitch angle θd.

For example, the light emitting element array 112 has an interface through which image data that specifies ON-OFF (or luminance) of the pixels PIX is input. The correction unit 224 in this case may alternatively shift the position of the on-pixel group PG_ON, that corresponds to the pattern PTN contained in the image data, up or down by the correction amount Δy. That is, the correction unit 224 shifts the position of the on-pixel group contained in the image data, up or down with reference to the predetermined position y₀, so as to cancel the dynamic component θd in the pitch angle θp.

The structure of the lamp system 100 has been described. Next, operations thereof will be explained.

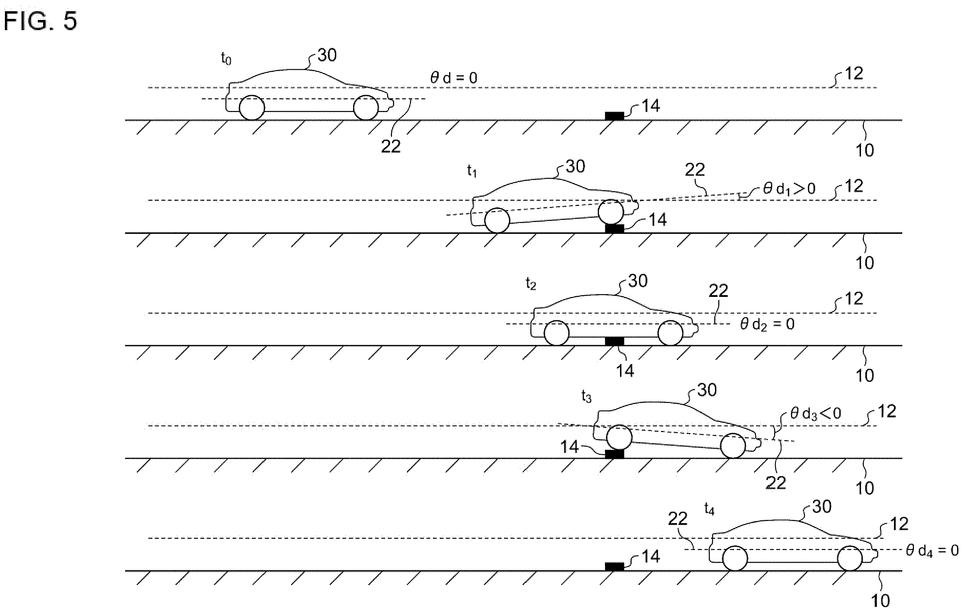

Fig. 5 is a drawing illustrating an exemplary travel scene of the vehicle. In this example, a vehicle 30 travels from left to right in the drawing, while getting over a step 14 on the road face 10. Fig. 5 illustrates postures of the vehicle 30 at a plurality of times to to t₄. The individual times t₀ to t₄ stand for the following states.

Time t₀: State of travel in front of step 14
Time t₁: State of front wheel run on step 14
Time t₂: State of front wheel climbed over step 14
Time t₃: State of rear wheel run on step 14
Time t₄: State of rear wheel climbed over step 14

The dynamic pitch angle θd at each of the times to, t₂, and t₄ equals 0. The dynamic pitch angle θd at time t₁ has a positive value θd₁, meanwhile the dynamic pitch angle θd at time t₃ has a negative value θd₃.

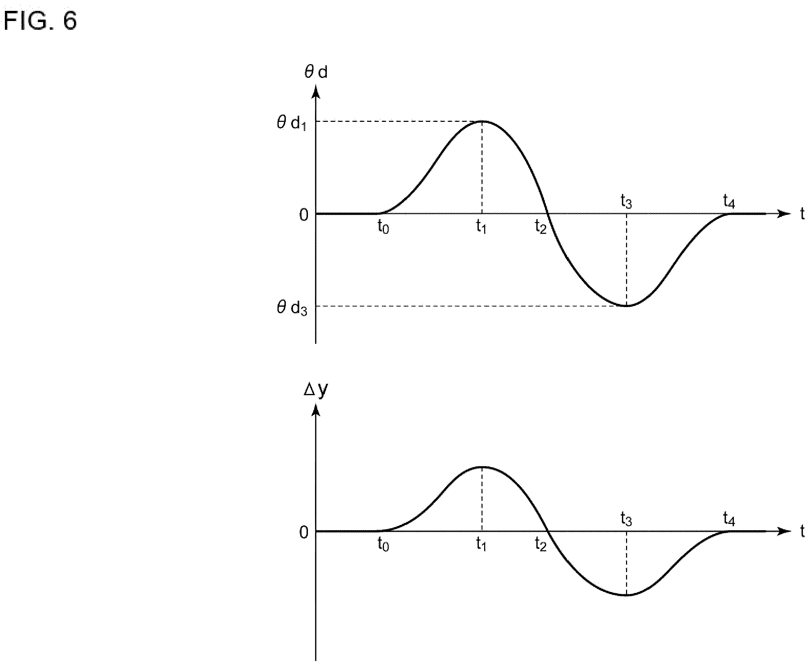

Fig. 6 is a drawing illustrating a waveform of dynamic pitch angle θd and a waveform of correction amount Δy, corresponded to the travel scene illustrated in Fig. 5. As illustrated in Fig. 5, the dynamic pitch angle θd swings in the positive direction, then swings in the negative direction, and finally returns to 0. The correction amount Δy of the on-pixel group PG_ON is generated so as to cancel the fluctuation of the dynamic pitch angle θd.

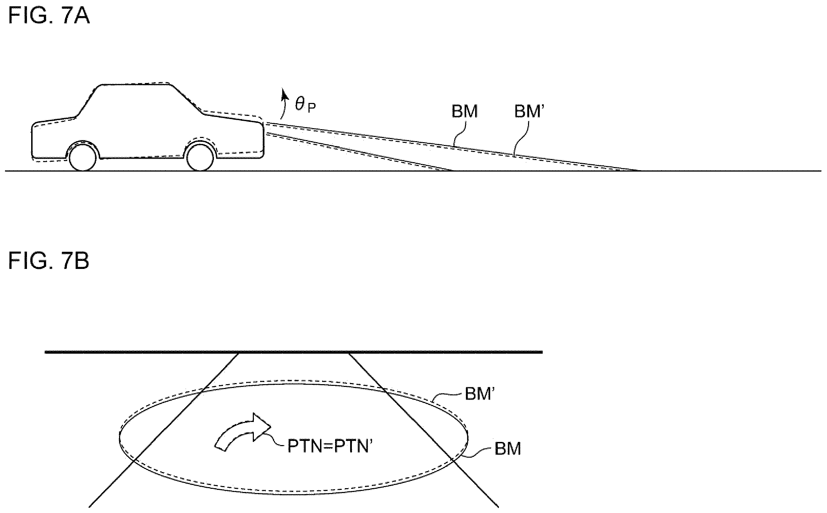

Figs. 7(a) and (b) are drawings illustrating operations of the lamp system 100 according to an embodiment. Fig. 7(a) illustrates a change in the vehicle posture, that is, the pitch angle θp. In response to the change in the pitch angle θp, a position of the on-pixel group PG_ON of the high-definition lamp unit 110 is corrected. This keeps the angle of illumination (incident angle) of the road face drawing beam BM on the road face 10 constant, and keeps the drawing position (relative position with the vehicle) of the pattern PTN constant, regardless of the pitch angle θp. Since, as illustrated in Fig. 7(b), the pattern PTN to be drawn on the road face 10 is drawn at the same position regardless of the change in the pitch angle θp, so that the blurring is suppressed, and the visibility may be improved.

The pattern PTN on the road face would occasionally be distorted only by simply shifting the on-pixel group PG_ON up or down, depending on the design of the illumination optical system 114. Distorted pattern PTN will be a cause of degraded visibility. The controller 200 in this case may also correct the shape of the on-pixel group PG_ON that corresponds to the same pattern PTN, in response to the pitch angle θp.

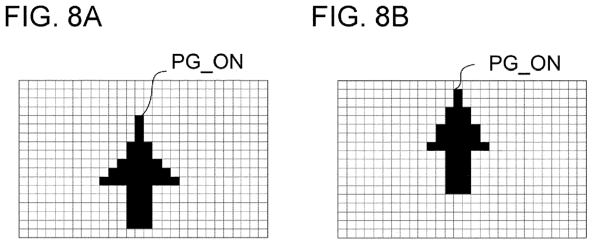

Figs. 8(a) and (b) are drawings illustrating correction of the on-pixel group PG_ON. In the drawing, filled pixels represent the on-pixel group PG_ON. Figs. 8 (a) and (b) illustrate the on-pixel groups PG_ON corresponded to different pitch angles θp, which differ in the position y, and the shape of arrangement of the on-pixel groups PG_ON. The shapes of the on-pixel groups PG_ON are corrected so as to equalize the patterns to be drawn on the road face.

In one embodiment, the controller 200 may determine the reference position y₀ of the on-pixel group PG_ON with reference to the static pitch angle θs, and may concurrently correct the shape of the on-pixel group PG_ON. Then, the controller 200 may shift the corrected on-pixel group PG_ON in the vertical direction, in response to the dynamic pitch angle θd.

In one embodiment, the controller 200 may determine the reference position y₀ of the on-pixel group PG_ON, with reference to the static pitch angle θs. The controller 200 may shift the position of the on-pixel group PG_ON from the reference position y₀ in response to the dynamic pitch angle θd, and may concurrently correct the shape of the on-pixel group PG_ON.

With the shape of the on-pixel group PG_ON thus corrected, the pattern PTN on the road face may be suppressed from deforming, thereby preventing the visibility from degrading.

### (Modified Examples)

The embodiments are illustrative and allow various variations. The paragraphs below will describe modified examples of the lamp system 100.

### (Modified Example 1)

The embodiment has detected the dynamic component of the pitch angle with use of the gyro sensor. The present disclosure is, however, not limited thereto. For example, the dynamic component of the pitch angle may be detected with use of a combination of a front vehicle height sensor arranged on the front suspension of the vehicle body, and a rear vehicle height sensor arranged on the rear suspension of the vehicle body.

### (Modified Example 2)

The embodiment has constituted the high-definition lamp unit 110 with the light emitting element array 112. The present disclosure is, however, not limited thereto. For example, the high-definition lamp unit 110 may contain a light source that generates light with a substantially flat intensity distribution, and a spatial light modulator that spatially patterns the emitted light of the light source. The spatial light modulator is exemplified by digital micromirror device (DMD), and liquid crystal device.

### (Modified Example 5)

The method by which the controller 200 shifts the position of the on-pixel group PG_ON in the vertical direction, is not limited to a method of correcting the image data to be supplied to the light emitting element array 112. For example, the light emitting element array 112 may have a pixel shifting function. In this case, the light emitting element array 112 may only be given the image data as the reference, and the pixel shift amount Δy.

### (Modified Example 6)

Having described in the embodiments the correction in response to the dynamic change (dynamic pitch angle θd) during travel, the road face drawing takes place also for the vehicle that stands still. The controller 200 may conduct the correction, only with reference to the change in the static pitch angle θs.

Having described the present disclosure with use of specific terms referring to the embodiments, the embodiments merely illustrate the principle and applications of the present disclosure, allowing a variety of modifications and layout change without departing from the spirit of the present disclosure specified by the claims.

### INDUSTRIAL APPLICABILITY

The present disclosure relates to a vehicle lamp.

### REFERENCE SIGNS LIST

100 lamp system, 110 high-definition lamp unit, 112 light emitting element array, 114 illumination optical system, PIX pixel, 120 sensor, 200 controller, 210 pitch angle calculator, 220 drawing position correction unit, 222 correction amount calculator, 224 correction unit.

## Claims

1. A lamp system comprising:
an adaptive driving beam lamp that contains a plurality of individually controllable pixels, and is structured to illuminate a road face with beam with a light distribution pattern corresponding to states of the pixels;
a sensor provided to enable detection of a pitch angle of a vehicle body;
and,
a controller structured to control on/off of the pixels in response to a pattern to be drawn on the road face, and to correct the states of the pixels in response to the pitch angle.

2. The lamp system according to claim 1, wherein the controller is structured to correct the states of the pixels, in response to a dynamic change in the pitch angle of the vehicle body of a vehicle during travel.

3. The lamp system according to claim 1, wherein the controller is structured to correct the states of the pixels, in response to the pitch angle of the vehicle body of a vehicle during standing still.

4. The lamp system according to claim 1 or 2, wherein the controller is structured to shift a position of an on-pixel group being turned on, from among the pixels, in a vertical direction in response to the pitch angle.

5. The lamp system according to any one of claims 1 to 3, wherein the controller is structured to conduct the correction by changing an arrangement of an on-pixel group being turned on, from among the pixels, in response to the pitch angle.

6. The lamp system according to claim 2, wherein the pitch angle contains a dynamic component whose frequency is 0.5 Hz or higher.

7. The lamp system according to any one of claims 1 to 6, wherein the sensor contains a gyro sensor.

8. A controller for an adaptive driving beam lamp that contains a plurality of individually controllable pixels, and is structured to illuminate a road face with beam with a light distribution pattern corresponding to states of the pixels,
the controller being structured to conduct:
setting on/off of the pixels in response to a pattern to be drawn on the road face; and
correcting the states of the pixels in response to a pitch angle of a vehicle body.

9. A control method for an adaptive driving beam lamp that contains a plurality of individually controllable pixels, and is structured to illuminate a road face with beam with a light distribution pattern corresponding to states of the pixels, the control method comprising:
detecting a pitch angle of a vehicle body; and
controlling on/off of the pixels in response to a pattern to be drawn on the road face, and correcting the states of the pixels in response to the pitch angle.
